(19) Europäisches Patentamt / European Patent Office / Office européen des brevets

(11) **EP 2 142 389 B1**

(12) **EUROPEAN PATENT SPECIFICATION**

(45) Date of publication and mention
of the grant of the patent:
**04.06.2014 Bulletin 2014/23**

(21) Application number: **08716718.5**

(22) Date of filing: **28.03.2008**

(51) Int Cl.:
***B60C 23/04*** (2006.01)

(86) International application number:
**PCT/EP2008/002514**

(87) International publication number:
**WO 2008/119524 (09.10.2008 Gazette 2008/41)**

(54) **APPARATUS AND METHOD FOR ADAPTIVE TEMPERATURE COMPENSATION IN A TYRE PRESSURE MONITORING SYSTEM**

VORRICHTUNG UND VERFAHREN ZUR ADAPTIVEN TEMPERARURKOMPENSATION IN EINEM REIFENDRUCKÜBERWACHUNGSSYSTEM

APPAREIL ET PROCÉDÉ POUR UNE COMPENSATION DE TEMPÉRATURE ADAPTATIVE DANS UN SYSTÈME DE SURVEILLANCE DE PRESSION DE PNEU

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.03.2007 GB 0706092**

(43) Date of publication of application:
**13.01.2010 Bulletin 2010/02**

(73) Proprietor: **Schrader Electronics Limited
Antrim BT41 1QS (GB)**

(72) Inventors:
• **PATTISON, Allister
Ballymena
County Antrim BT43 6NQ (GB)**
• **REID, Ivan
Belfast BT6 9ET
County Down (GB)**

(74) Representative: **Wallace, Alan Hutchinson et al
FRKelly
4 Mount Charles
Belfast, Northern Ireland BT7 1NZ (GB)**

(56) References cited:
**EP-A- 1 384 604        DE-A1- 10 360 122
DE-A1-102005 036 594**

**Description**

**Field of the Invention**

The present invention relates to tyre pressure monitoring systems and in particular to adaptive temperature compensation in tyre pressure monitoring systems.

**Background to the Invention**

Tyre pressure monitoring systems (TPMS) are well known. A simple method for monitoring tyre pressure is to monitor the absolute pressure within a tyre and, if it falls below a threshold, to issue a warning. However, this does not allow for variations in tyre temperature that occur while the vehicle is in motion (the temperature, and therefore the pressure, inside a tyre increases in a substantially linear manner during use of the vehicle).
It is known to perform temperature compensated tyre pressure monitoring. This involves using Boyle's Law to adjust the absolute, or raw, measured tyre pressure and the measured temperature of the air inside the tyre with respect to a reference temperature. Conventionally, the reference temperature is fixed and does not take into account variations in ambient temperature, like in document EP 1384 604, according to the respective preamble 1, 13 and 14. This has two main disadvantages: increased sensitivity and hence increased probability of false temperature-compensated (TC) pressure warnings when ambient temperatures are higher than the chosen reference temperature e.g. in summer; and reduced sensitivity when ambient temperatures are lower than the chosen reference temperature allowing drivers to drive on tyre pressures which should be inflated to compensate for low outside average air temperatures warnings, e.g. in winter.
It would be desirable to mitigate these problems.

**Summary of the Invention**

Accordingly, one aspect of the invention provides an apparatus for performing temperature compensation in a tyre pressure monitoring system arranged to measure the pressure and temperature of fluid within at least one tyre, the apparatus being arranged to adjust the measured tyre pressure with respect to the value of a reference temperature, wherein the apparatus is cooperable with means for determining ambient temperature, the apparatus being arranged to adjust the reference temperature in response to determining that ambient temperature has changed.
More particularly, the apparatus increases the reference temperature in response to determining that ambient temperature has increased and decreases the reference temperature in response to determining that ambient temperature has decreased. Advantageously, the rate at which the reference temperature is increased is higher than the rate at which the reference is decreased.
In preferred embodiments, the apparatus sets the reference temperature to, or substantially to, the measured ambient temperature in response to determining that the ambient temperature exceeds the reference temperature. Advantageously, this is performed substantially immediately after the determination is made, or within a time period preferably not exceeding approximately 20 minutes.
The preferred apparatus, in response to determining that the current ambient temperature is less than the reference temperature, sets the reference temperature to an average of the current ambient temperature and at least one previous ambient temperature and/or the current reference temperature. For example, the reference temperature may be calculated as a rolling average of the current ambient temperature and a plurality of previous ambient temperatures. Alternatively, the new reference temperature may be calculated as a weighted average of the current reference temperature and the current ambient temperature.
In general, when the current ambient temperature is less than the reference temperature, a new value for the reference temperature may be calculated by averaging ambient temperature values over n time periods t, where the ambient temperature and a new value for the reference temperature are calculated every time period t. By way of example, the reference temperature may be calculated as a rolling average of ambient temperature values taken over a 24 hour period of operation, wherein a new value for the reference temperature is calculated every hour.
A second aspect of the invention provides a tyre pressure monitoring system arranged to measure the pressure and temperature of fluid within at least one tyre, the system including apparatus for performing temperature compensation, the apparatus being arranged to adjust the measured tyre pressure with respect to the value of a reference temperature, wherein the apparatus is cooperable with means for determining ambient temperature, the apparatus being arranged to adjust the reference temperature in response to determining that ambient temperature has changed.
A third aspect of the invention provides a method of performing temperature compensation in a tyre pressure monitoring system arranged to measure the pressure and temperature of fluid within at least one tyre and to adjust the measured tyre pressure with respect to the value of a reference temperature, the method comprising: determining ambient temperature; and, in response to determining that ambient temperature has changed, adjusting the reference temperature.

A fourth aspect of the invention provides a computer program product comprising computer usable code stored on a computer usable medium, the computer program code being arranged to cause a computer to perform the method of the third aspect of the invention.

Active adaptation of the reference temperature insures that temperature compensation is matched to the ambient conditions of the drive so that system sensitivity is maintained closer to design intended levels in all seasons.

Further advantageous aspects of the invention will become apparent to those ordinarily skilled in the art upon review of the following description of a preferred embodiment and with reference to the accompanying drawings.

**Brief Description of the Drawings**

An embodiment of the invention is now described by way of example and with reference to the accompanying drawings in which:

Figure 1 is a schematic block diagram of a typical tyre pressure monitoring system;

Figure 2 is a graph plotting pressure against temperature and illustrating conventional temperature compensated tyre pressure monitoring when ambient temperature is higher than the reference temperature;

Figure 3 is a graph plotting pressure against temperature and illustrating how the temperature compensated tyre pressure monitoring of Figure 2 may be improved by adjustment of the reference temperature;

Figure 4 is a graph plotting pressure against temperature and illustrating conventional temperature compensated tyre pressure monitoring when ambient temperature is lower than the reference temperature;

Figure 5 is a graph plotting pressure against temperature and illustrating how the temperature compensated tyre pressure monitoring of Figure 4 may be improved by adjustment of the reference temperature;

Figure 6 is a flow chart illustrating a preferred method of determining a reference temperature;

Figures 7 and 8 are flow charts illustrating a first implementation of the method of Figure 6;

Figures 9 and 10 are flow charts illustrating a second implementation of the method of Figure 6.

**Detailed Description of the Drawings**

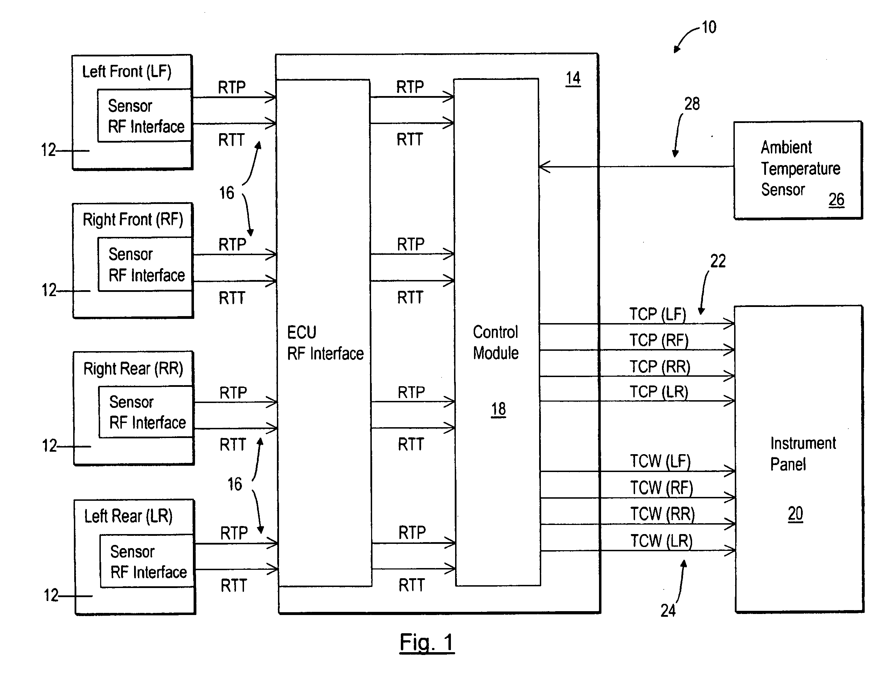

Referring now to Figure 1 of the drawings, there is shown, generally indicated as 10, a typical tyre pressure monitoring system (TPMS) for measuring the pressure of a fluid (typically air) in a tyre. The TPMS 10 usually comprises a respective sensor unit 12 for each tyre bearing wheel (not shown) of the vehicle (not shown) in which it is installed. In the example of Figure 1, the vehicle is assumed to have four wheels and the sensor units are designated as Left Front (LF), Right Front (RF), Right Rear (RR) and Left Rear (LR) corresponding to the position of the wheel on which they are mounted. Each sensor unit 12 includes an appropriate sensor device (e.g. a piezo-electric pressure sensor (not shown)) for measuring fluid (typically air) pressure within the respective tyre. The sensor units 12 also include a respective temperature sensor (not shown) for measuring the temperature of the fluid within the respective tyre.

The TPMS 10 includes a receiver unit 14 arranged to receive signals 16 from the sensor units 12 indicating the measured tyre pressure (RTP) and/or temperature (RTT). The sensor units 12 are typically wheel mounted, the receiver unit 14 being located remotely from the sensor units 12 on some other part of the vehicle. Typically, the sensor units 12 and receiver 14 communicate wirelessly using for example an RF (radio frequency) link. To this end, in Figure 1 the receiver 14 and each sensor unit 12 has a respective RF transmitter and/or receiver as required. The receiver 14 includes a control apparatus, or unit, 18 comprising a programmable processing device, usually a microprocessor or microcontroller. The control unit 18 analyses the information received from the sensor units 12 and transmits corresponding information to a display unit 20 which is usually provided on the vehicle's instrument panel. In particular, the control unit 18 may send a respective temperature compensated pressure (TCP) value signal 22 and, if warranted, a respective temperature compensated pressure warning (TCW) signal 24 to the display unit 20 for each wheel.

The control unit 18 is also arranged to receive a signal 28 indicating the vehicle's ambient, or outside, temperature. This may be obtained from any convenient vehicle temperature sensor 26, for example the temperature sensor used by an air conditioning system.

When performing temperature compensation tyre pressure monitoring, the control unit 14 adjusts the measured, or raw, pressure value received from each sensor unit 12 depending on a reference temperature and on the respective tyre temperature value received from the respective sensor unit 12. Equation 1 gives a suitable algorithm for performing temperature compensation:

$$P_{TC} = \left[ \frac{(P_{meas} + 1.01) \times (T_{ref} + 273.15)}{(T_{meas} + 273.15)} \right] - 1.01 \qquad [1]$$

Where $P_{TC}$ is the temperature compensated pressure value, $P_{meas}$ is the measured tyre pressure value, $T_{meas}$ is the measured tyre temperature value and $T_{ref}$ is the reference temperature. In equation [1], which is only exemplary, the constant 273.15 effects a conversion from Celsuis to Kelvin, and the constant 1.01 is included on the assumption that pressure is measured in bar.

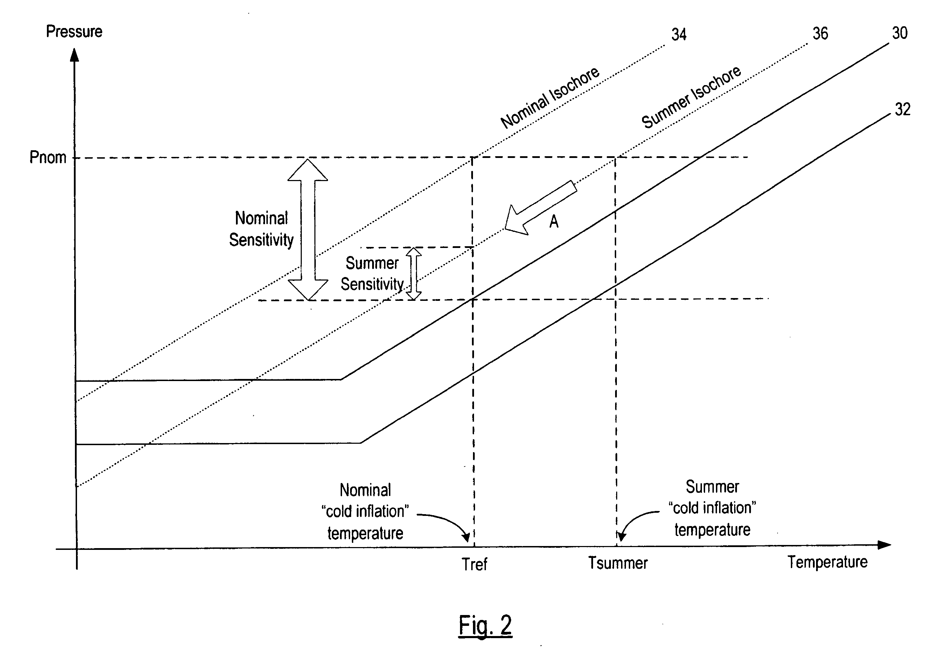

Conventionally, the reference temperature, Tref, is fixed to a nominal value, for example 20°C. Figure 2 shows an example of how a tyre may be filled in relatively warm conditions, e.g. during summer, in a system where a fixed reference temperature $T_{ref}$ is used. It is assumed that the tyre is filled to the placard, or nominal, level, $P_{nom}$, at an ambient temperature that is higher than the chosen reference $T_{ref}$. Figure 2 also shows a pressure warning threshold 30, a pressure alarm threshold 32, a nominal isochore 34 (indicating how tyre pressure will vary with tyre temperature at an assumed ambient temperature of $T_{ref}$) and a summer isochore 36 (indicating how tyre pressure will vary with tyre temperature at an ambient temperature of $T_{summer}$). Temperature compensation in accordance with equation [1] (as indicated by arrow A) adjusts (in this case reduces) the measured tyre pressure in proportion to the difference between $T_{ref}$ and the actual fill temperature $T_{summer}$ (e.g. 0.11 Bar per 10C difference at a fill pressure of 2 Bar). This leads to a reduced distance between the warning threshold 30 and the temperature compensated pressure and, hence, increased probability of false warnings, i.e. increased sensitivity.

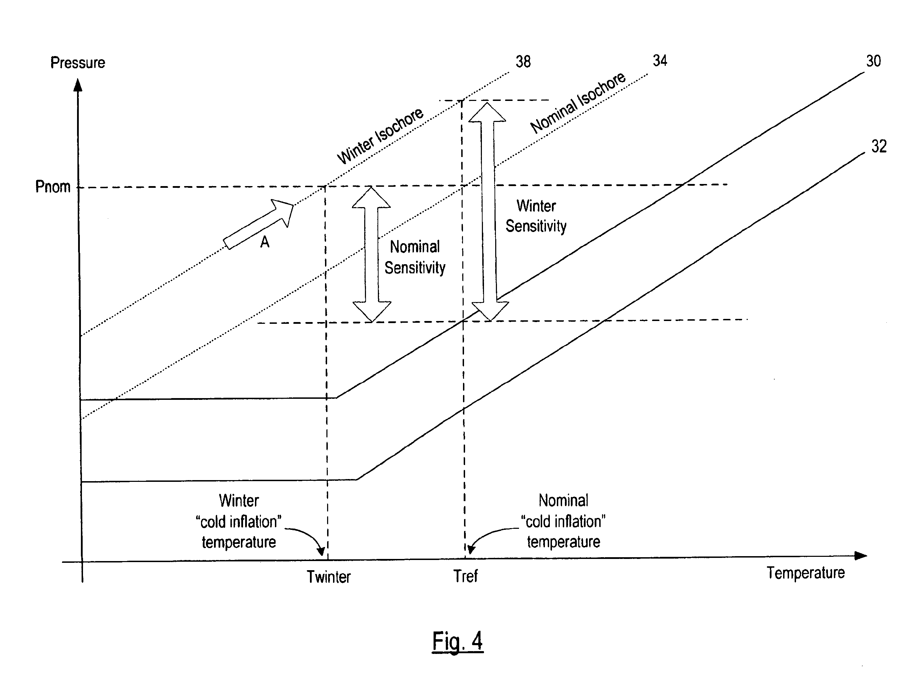

Figure 4 shows an example of how a tyre may be filled in relatively cold conditions, e.g. during winter, in a system where a fixed reference temperature $T_{ref}$ is used. It is assumed that the tyre is filled to the placard or nominal level, $P_{nom}$, at an ambient temperature that is lower than the chosen reference $T_{ref}$. Figure 4 also shows a pressure warning threshold 30, a pressure alarm threshold 32, a nominal isochore 34 (indicating how tyre pressure will vary with tyre temperature at an assumed ambient temperature of $T_{ref}$) and a winter isochore 38 (indicating how tyre pressure will vary with tyre temperature at an ambient temperature of $T_{winter}$) Temperature compensation in accordance with equation [1] (as indicated by arrow B) adjusts (in this case increases) the measured tyre pressure in proportion to the difference between $T_{ref}$ and the actual fill temperature $T_{winter}$ (e.g. 0.11 Bar per 10C difference at a fill pressure of 2 Bar). This leads to an increased distance between the warning threshold 30 and the temperature compensated pressure and, hence, reduced sensitivity.

To mitigate the problem outlined in Figures 2 and 4, it is proposed to adapt the reference temperature $T_{ref}$ in accordance with the measured outside or ambient temperature.

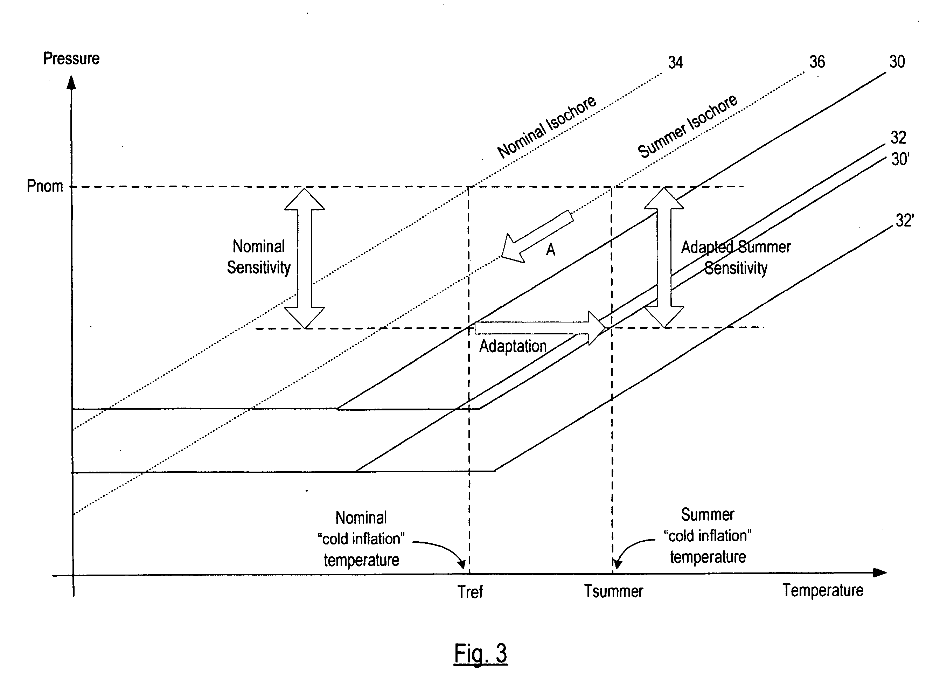

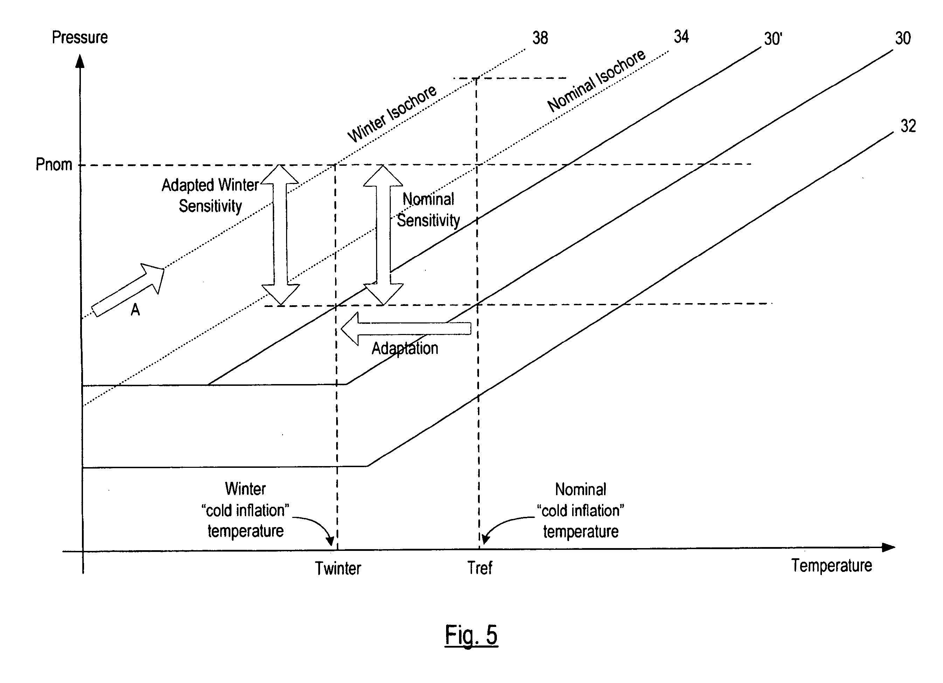

Figures 3 and 5 show the effect of adapting the reference temperature in the context of the summer scenario illustrated in Figure 2 and the winter scenario illustrated in Figure 4, respectively. The adapted alert thresholds 30', 32' are effectively shifted positively (summer) or negatively (winter) along the temperature axis to maintain the system sensitivity at the nominal level, the size of the shift being dependent on the value of the ambient temperature. In Figures 3 and 5, the thresholds 30, 32 are moved to the respective ambient temperature $T_{summer}$ and $T_{winter}$ such that the required sensitivity is maintained. In the preferred embodiment, the ambient temperature is calculated as a moving average of the past n ambient temperature samples, as is described in more detail below.

The TPMS 10, or more particularly the control unit 18 is initialised with a default, or nominal, reference temperature $T_{ref}$, which may for example be 20°C. Subsequently, and preferably over the lifetime of the vehicle or TPMS 10, the control unit 14 adjusts $T_{ref}$ depending on a measured or calculated value for the vehicle's ambient temperature. Preferably, the value for ambient temperature is only measured or calculated for this purpose when the vehicle's engine is running and, more preferably, only when the vehicle is moving. In the preferred embodiment, $T_{ref}$ is only adjusted when the vehicle's engine is running and, more preferably, only when the vehicle is moving.

In the preferred embodiment, three values of average outside or ambient air temperature are maintained by the control unit 18:

Average outside air temperature sample, T(ots): This value indicates an average outside temperature, preferably measured over relatively short intervals, or sampling periods. In the present example, the sampling period is 5 minutes long although longer or shorter sampling periods may be used. The sampling period preferably does not exceed approximately 20 minutes. Typically, the control unit 18 averages a plurality (5 in the present example) of outside temperature samples, received from temperature sensor 26, during each sampling period. At the end of each sampling period, a new sampling period starts. The value for T(ots) is therefore updated after every sampling period.

*Average hourly outside air temperature, T(hrly):* This is the average of all the T(ots) samples recorded in a period which is longer than the sampling period and which, in this example, is set at one hour. At the end of each hour a new hourly period starts. The value for T(hrly) is therefore updated on an hourly basis. It will be understood that the period over which T(hrly) is calculated may be more or less than one hour.

*24hr average outside air temperature, T(24hr):* This is the average of all the T(hrly) values recorded in each hour for the previous 24 hrs, i.e. a rolling average. This value is updated on an hourly basis using the most recently calculated T(hrly). The hourly update of T(24hr) is then taken as the new T(ref) for temperature compensation during the next period, e.g. hour, of driving. It will be understood that the period over which T(24hr) is calculated may, in alternative embodiments, be longer or shorter than 24 hours, provided it is longer than the period over which T(hrly) is calculated.

In alternative embodiments, it is not necessary for the control unit 18 to maintain three separate average values for ambient temperature. For example, in a simple embodiment, only one average value need be maintained, the value of which is used to determine $T_{ref}$. It is preferred that this average value be a rolling average value at least when ambient temperature is falling with respect to $T_{ref}$.

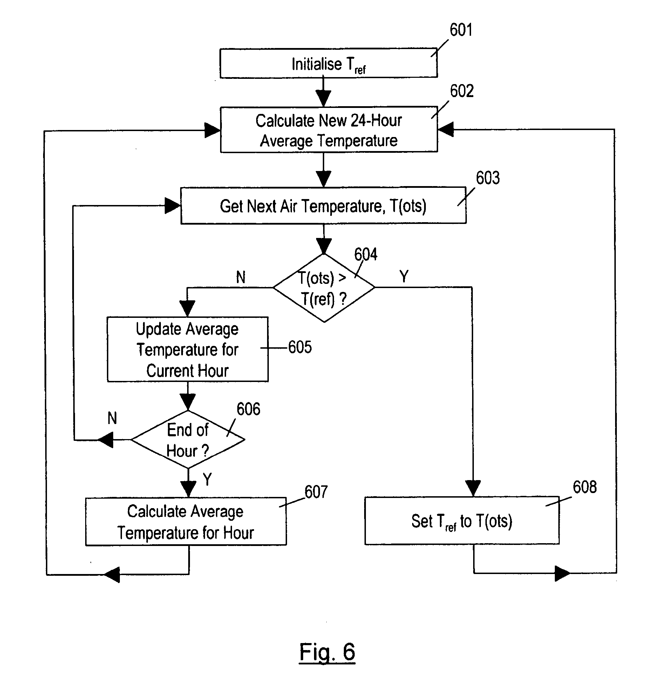

The preferred algorithm for calculating the average ambient temperature for use as $T_{ref}$, which in this example is the same as T(24hr), is illustrated in Figure 6. The preferred algorithm is now described with reference to Figure 6, numerals in parentheses [ ] referring to modules of Figure 6. $T_{ref}$ is initialised [601] to, for example, a default setting. T(24hr) is calculated [602] which, initially, may involve setting the value of T(24hr) to the initial value of $T_{ref}$.

T(ots) is calculated [603] and, at the end of every T(ots) sampling period, the value of T(ots) is compared against the current value of T(ref) [604].

If T(ots) is lower than (or equal to) the current T(ref), T(ots) is stored and the T(ots) sampling period restarts. While T(ots) at the end of each sampling period continues to be less than $T_{ref}$ the cycle of sample and store continues until one hour has elapsed [605, 606, 603, 604]. At this point, the average temperature for the hour is calculated to give T(hrly) for that hour [607]. T(24hr) is then updated using the newly calculated T(hrly) giving a new $T_{ref}$. Hence, while T(ots) is lower than $T_{ref}$, the algorithm updates $T_{ref}$ on a hourly basis using T(hrly) for the previous hour. This is preferably achieved using a rolling average calculation. Thus when the outside air temperature is falling relative to $T_{ref}$, the value of $T_{ref}$ is updated hourly and falls slowly towards the reduced average outside air temperature.

If, however, T(ots) at the end of the sampling period is higher than the current $T_{ref}$ value, T(ots) is immediately adopted as the new $T_{ref}$ [608]. When this occurs, T(24hr) is also set to T(ots) and the process of hourly averaging is restarted. Algorithm time is therefore reset to T=0, equivalent to the vehicle leaving the factory, but with a new $T_{ref}$ of T(ots).

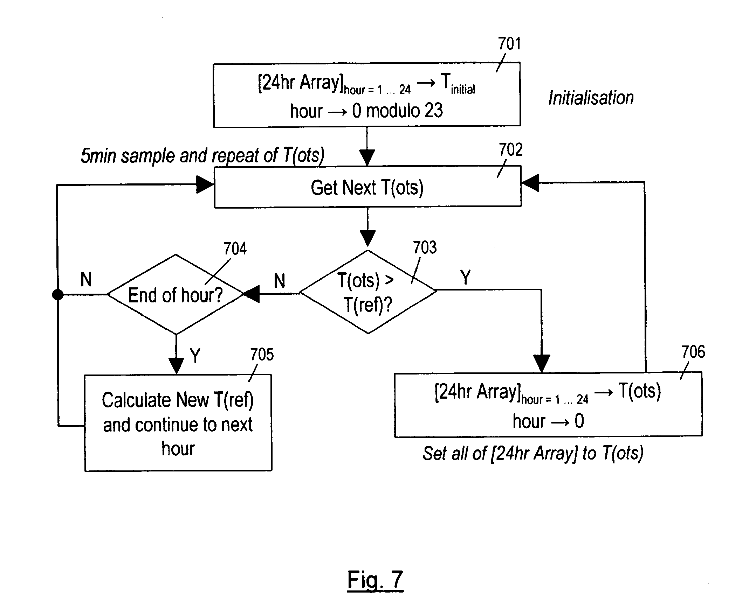

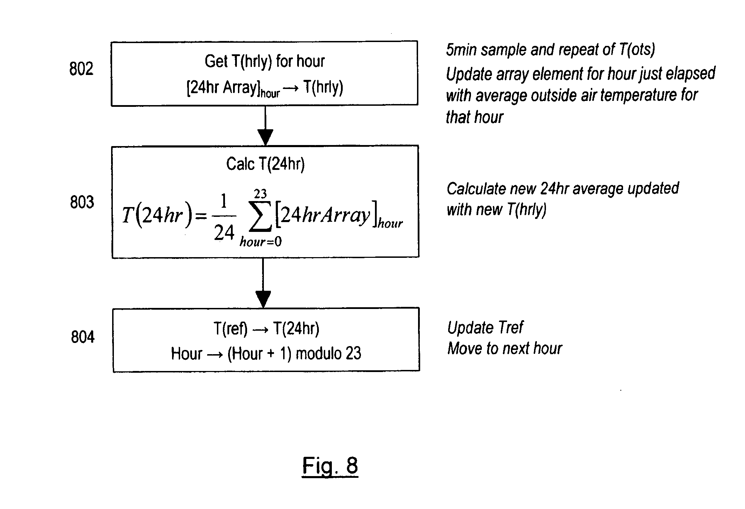

Two preferred averaging mechanisms for calculating T(24hr) are envisaged. The first calculates a full moving average of a plurality (24 in this example) of ambient temperature values (T(hrly) in this example), and is illustrated in Figures 7 and 8. Referring to Figures 7 and 8, each value in an array of *n* temperature values (where n = 24 in this example) is first initialised to a default initial value [701]. T(ots) is obtained and compared to $T_{ref}$ [702, 703]. While T(ots) remains less than $T_{ref}$, successive values of T(ots) are stored in order to calculate T(hrly) [702, 703, 704]. If T(ots) remains less than $T_{ref}$ for the specified period (1 hour) then a new $T_{ref}$ is calculated [705] using a moving average of values for T(hrly), as is illustrated in more detail in Figure 8 which shows an implementation of module 705. As each successive T(hrly) is calculated, it is stored in order in the array [802]. Each time the array is updated in this way, a new value for T(24hr), and therefore $T_{ref}$, is calculated as the average of the values stored in the array [803, 804]. With this technique, the values for T(hrly) calculated in the previous 24 hours are stored in any convenient manner and T(24hr) is calculated as the average of these values. Using this mechanism, while T(ots) remains equal to or below $T_{ref}$, $T_{ref}$ falls to a new lower outside air temperature in exactly 24 hours of accumulated driving, or operation. However, when T(ots) exceeds $T_{ref}$, $T_{ref}$ and all of the values of the T(24hr) array are immediately set to T(ots) [706]

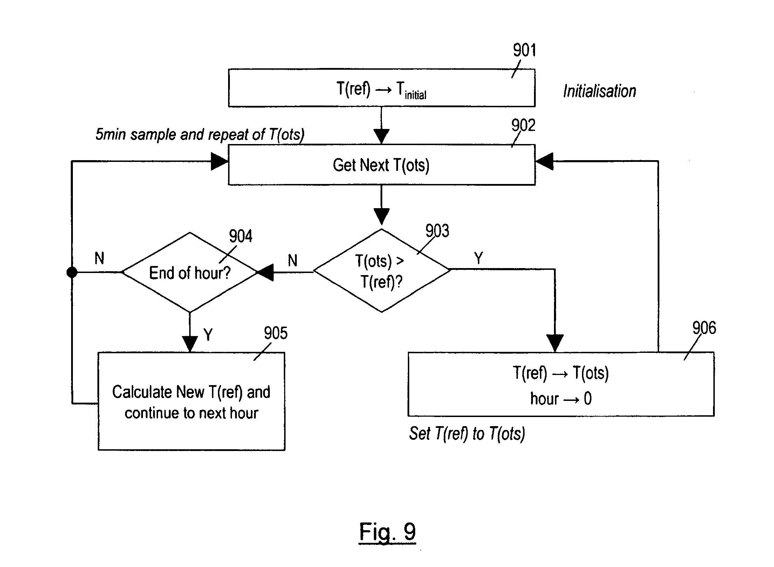

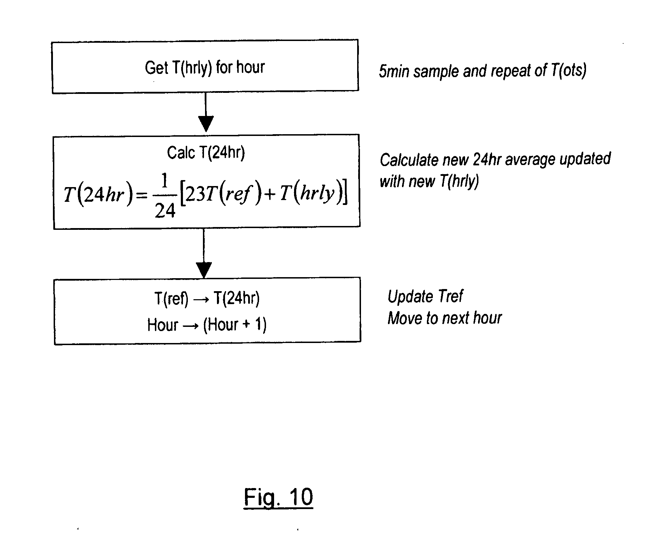

An alternative averaging mechanism is illustrated in Figures 9 and 10. This mechanism does not require that 24 values of T(hrly) are stored since it calculates a new value for $T_{ref}$ using the current value of $T_{ref}$ and the current value for T(ots). At the end of each hour, the new $T_{ref}$ is calculated as follows:

$$T(ref)_{new} = \frac{1}{24}\left[23.T(ref)_{current} + T(hrly)\right] \qquad [2]$$

More generally, new $T_{ref}$ is calculated by multiplying current $T_{ref}$ by $n-1$, adding current T(hrly) to the result and then dividing by $n$, where $n$ is the number of samples over which the reference temperature is being averaged. Hence the factors 23 and 24 included in equation [2] are not critical to the invention.

Referring to Figures 9 and 10, each value in an array of $n$ temperature values (where n=24 in this example) is first initialised to a default initial value [901]. T(ots) is obtained and compared to $T_{ref}$ [902, 903]. While T(ots) remains less than $T_{ref}$, successive values of T(ots) are stored in order to calculate T(hrly) [902, 903, 904]. If T(ots) remains less than $T_{ref}$ for the specified period (1 hour) then a new $T_{ref}$ is calculated [905] using equation [2], as is illustrated in more detail in Figure 10. Time to converge to new average outside air temperature for this algorithm is 100 hours (for a weighting of 23 in equation [2]). However, when T(ots) exceeds $T_{ref}$, $T_{ref}$ and T(24hr) are immediately set to T(ots) [906]. In an alternative embodiment, an array is not used. Instead the starting point is a single value for T(ots) which is modified periodically, e.g. hourly, using the average temperature for the previous period (e.g. hour). The advantage of this arrangement is that there is only a requirement to hold one value.

In the embodiment described, the ambient temperature is determined every five minutes by an average of samples taken every minute, an average ambient temperature value is determined for each hour, and a new value for the reference temperature is determined every hour by an average taken over a 24 hour period. It will be understood that these time periods are provided by way of example and that, in alternative embodiments, each of the aforesaid periods may be reduced or increased independently of the other.

It will be apparent that the techniques presented herein cause the reference temperature to be adjusted in accordance with ambient temperature in order that the sensitivity of the TPMS 10 can be maintained at a desired level. It is noted in particular, that in the preferred embodiment, the rate at which the reference temperature is raised in response to the determination that ambient temperature is higher than the reference temperature is faster (preferably an instant adjustment to the level of the ambient temperature (instant meaning at the next available opportunity which will depend on the temperature averaging period)) than the rate at which the reference temperature is lowered in response to the determination that ambient temperature is lower than the reference temperature. This arrangement significantly reduces the occurrence of false detections. This is an important commercial consideration since consumers tend to find false detections particularly irksome.

The invention is not limited to the embodiments described herein which maybe modified or varied without departing from the scope of the invention.

## Claims

1. An apparatus (18) for performing temperature compensation in a tyre pressure monitoring system (10) arranged to measure the pressure and temperature of fluid within at least one tyre, the apparatus comprising means for adjusting the measured fluid pressure depending on the value of a reference temperature and on the measured fluid temperature, wherein the apparatus is co-operable with means for determining ambient temperature (26), **characterised in that** the apparatus is arranged to adjust the reference temperature value in response to determining that ambient temperature has changed.

2. An apparatus as claimed in claim 1, wherein said adjusting means is arranged to increase the reference temperature value in response to determining that ambient temperature has increased.

3. An apparatus as claimed in claim 1 or 2, wherein said adjusting means is arranged to decrease the reference temperature value in response to determining that ambient temperature has decreased.

4. An apparatus as claimed in claim 2 or 3, wherein said adjusting means is arranged to increase the reference temperature value at a first rate, and to decrease the reference temperature value at a second rate, the first rate being higher than the second rate.

5. An apparatus as claimed in any preceding claim, wherein said adjusting means is arranged to set the reference temperature value substantially equal to the measured ambient temperature in response to determining that the ambient temperature exceeds the reference temperature value.

6. An apparatus as claimed in claim 5, wherein said adjusting means is arranged to set the reference temperature value substantially equal to the measured ambient temperature substantially immediately after determining that the ambient temperature exceeds the reference temperature value.

7. An apparatus as claimed in claim 5 or 6, wherein said adjusting means is arranged to set the reference temperature value substantially equal to the measured ambient temperature within a time period not exceeding approximately 20 minutes after determining that the ambient temperature exceeds the reference temperature value.

8. An apparatus as claimed in any preceding claim, wherein said adjusting means is arranged to, in response to determining that the current ambient temperature is less than the reference temperature value, set the reference temperature to an average of the current ambient temperature and at least one previous ambient temperature and/or the current reference temperature.

9. An apparatus as claimed in claim 8, wherein said adjusting means is arranged to calculate the reference temperature value as a rolling average of the current ambient temperature and a plurality of previous ambient temperatures.

10. An apparatus as claimed in claim 8 or 9, wherein said adjusting means is arranged to calculate said reference temperature value by averaging ambient temperature values over $n$ time periods $t$, where the ambient temperature and a new value for the reference temperature are calculated every time period $t$.

11. An apparatus as claimed in claim 8, wherein said adjusting means is arranged to calculate the reference temperature value as a weighted average of the current reference temperature and the current ambient temperature.

12. An apparatus as claimed in claim 11, wherein said weighted average is over $n$ time periods $t$, where the current ambient temperature and/or current reference temperature and a new value for the reference temperature are calculated every time period $t$.

13. A tyre pressure monitoring system (10) arranged to measure the pressure and temperature of fluid within at least one tyre, the system including apparatus (18) for performing temperature compensation, the apparatus comprising means for adjusting the measured fluid pressure depending on the value of a reference temperature and on the measured fluid temperature, wherein the apparatus is co-operable with means for determining ambient temperature (26), **characterised in that** the apparatus is arranged to adjust the reference temperature value in response to determining that ambient temperature has changed.

14. A method of performing temperature compensation in a tyre pressure monitoring system arranged to measure the pressure and temperature of fluid within at least one tyre and to adjust the measured tyre pressure with respect to the value of a reference temperature, the method comprising determining ambient temperature, and is **characterised by**, in response to determining that ambient temperature has changed, adjusting the reference temperature.

15. A computer program product comprising computer usable code stored on a computer usable medium, the computer program code being arranged to cause a computer to perform the method of claim 14.


**Patentansprüche**

1. Vorrichtung (18) zum Ausführen einer Temperaturkompensation in einem Reifendruck-Überwachungssystem (10), das dazu angeordnet ist, Druck und Temperatur von Fluid in mindestens einem Reifen zu messen, wobei die Vorrichtung Mittel zum Anpassen des gemessenen Fluiddrucks abhängig vom Wert einer Bezugstemperatur und der gemessenen Fluidtemperatur umfasst, wobei die Vorrichtung mit Mitteln zum Bestimmen der Umgebungstemperatur (26) zusammen betätigbar ist, **dadurch gekennzeichnet, dass** die Vorrichtung dazu angeordnet ist, den Bezugstemperaturwert als Reaktion auf das Bestimmen, dass sich die Umgebungstemperatur geändert hat, anzupassen.

2. Vorrichtung nach Anspruch 1, wobei das Anpassungsmittel dazu angeordnet ist, den Bezugstemperaturwert als Reaktion auf das Bestimmen, dass die Umgebungstemperatur gestiegen ist, zu erhöhen.

3. Vorrichtung nach Anspruch 1 oder 2, wobei das Anpassungsmittel dazu angeordnet ist, den Bezugstemperaturwert als Reaktion auf das Bestimmen, dass die Umgebungstemperatur gesunken ist, zu senken.

4. Vorrichtung nach Anspruch 2 oder 3, wobei das Anpassungsmittel dazu angeordnet ist, den Bezugstemperaturwert mit einer ersten Geschwindigkeit zu erhöhen und den Bezugstemperaturwert mit einer zweiten Geschwindigkeit zu senken, wobei die erste Geschwindigkeit höher ist als die zweite Geschwindigkeit.

**5.** Vorrichtung nach einem der vorangehenden Ansprüche, wobei das Anpassungsmittel dazu angeordnet ist, als Reaktion auf das Bestimmen, dass die Umgebungstemperatur den Bezugstemperaturwert übersteigt, den Bezugstemperaturwert der gemessenen Umgebungstemperatur im Wesentlichen gleichzusetzen.

**6.** Vorrichtung nach Anspruch 5, wobei das Anpassungsmittel dazu angeordnet ist, im Wesentlichen unmittelbar nach dem Bestimmen, dass die Umgebungstemperatur den Bezugstemperaturwert übersteigt, den Bezugstemperaturwert der gemessenen Umgebungstemperatur im Wesentlichen gleichzusetzen.

**7.** Vorrichtung nach Anspruch 5 oder 6, wobei das Anpassungsmittel dazu angeordnet ist, den Bezugstemperaturwert innerhalb einer ungefähr 20 Minuten nicht überschreitenden Zeitperiode nach dem Bestimmen, dass die Umgebungstemperatur den Bezugstemperaturwert übersteigt, der gemessenen Umgebungstemperatur im Wesentlichen gleichzusetzen.

**8.** Vorrichtung nach einem der vorangehenden Ansprüche, wobei das Anpassungsmittel dazu angeordnet ist, als Reaktion auf das Bestimmen, dass die aktuelle Umgebungstemperatur niedriger ist als der Bezugstemperaturwert, die Bezugstemperatur auf einen Mittelwert der aktuellen Umgebungstemperatur und mindestens einer früheren Umgebungstemperatur und/oder der aktuellen Bezugstemperatur zu setzen.

**9.** Vorrichtung nach Anspruch 8, wobei das Anpassungsmittel dazu angeordnet ist, den Bezugstemperaturwert als rollenden Mittelwert der aktuellen Umgebungstemperatur und mehrerer früherer Umgebungstemperaturen zu berechnen.

**10.** Vorrichtung nach Anspruch 8 oder 9, wobei das Anpassungsmittel dazu angeordnet ist, den Bezugstemperaturwert durch Mitteln von Umgebungstemperaturwerten über n Zeitperioden t zu berechnen, wobei die Umgebungstemperatur und ein neuer Wert für die Bezugstemperatur jede Zeitperiode t berechnet werden.

**11.** Vorrichtung nach Anspruch 8, wobei das Anpassungsmittel dazu angeordnet ist, den Bezugstemperaturwert als gewichteten Mittelwert der aktuellen Bezugstemperatur und der aktuellen Umgebungstemperatur zu berechnen.

**12.** Vorrichtung nach Anspruch 11, wobei der gewichtete Mittelwert über n Zeitperioden t ist, wobei die aktuelle Umgebungstemperatur und/oder aktuelle Bezugstemperatur und ein neuer Wert für die Bezugstemperatur jede Zeitperiode t berechnet werden.

**13.** Reifendruck-Überwachungssystem (10), das dazu angeordnet ist, Druck und Temperatur von Fluid in mindestens einem Reifen zu messen, wobei das System eine Vorrichtung (18) zum Ausführen einer Temperaturkompensation umfasst, wobei die Vorrichtung Mittel zum Anpassen des gemessenen Fluiddrucks abhängig vom Wert einer Bezugstemperatur und der gemessenen Fluidtemperatur umfasst, wobei die Vorrichtung mit Mitteln zum Bestimmen der Umgebungstemperatur (26) zusammen betätigbar ist, **dadurch gekennzeichnet, dass** die Vorrichtung dazu angeordnet ist, den Bezugstemperaturwert als Reaktion auf das Bestimmen, dass sich die Umgebungstemperatur geändert hat, anzupassen.

**14.** Verfahren zum Ausführen einer Temperaturkompensation in einem Reifendruck-Überwachungssystem, das dazu angeordnet ist, Druck und Temperatur von Fluid in mindestens einem Reifen zu messen und den gemessenen Reifendruck in Bezug auf den Wert einer Bezugstemperatur anzupassen, wobei das Verfahren das Bestimmen der Umgebungstemperatur umfasst und **gekennzeichnet ist durch** Anpassen der Bezugstemperatur als Reaktion auf das Bestimmen, dass sich die Umgebungstemperatur geändert hat.

**15.** Computerprogrammprodukt, umfassend auf einem computernutzbaren Medium gespeicherten computernutzbaren Code, wobei der Computerprogrammcode dazu angeordnet ist, einen Computer zu veranlassen, das Verfahren nach Anspruch 14 auszuführen.

**Revendications**

**1.** Appareil (18) permettant d'effectuer une compensation de température dans un système de surveillance de la pression des pneus (10) arrangé pour mesurer la pression et la température d'un fluide à l'intérieur d'au moins un pneu, l'appareil comportant un moyen de réglage de la pression mesurée du fluide en fonction de la valeur d'une température de référence et en fonction de la température mesurée du fluide, dans lequel l'appareil est en mesure de coopérer avec un moyen permettant de déterminer la température ambiante (26), **caractérisé en ce que** l'appareil est arrangé pour régler la valeur de la température de référence en réponse à la détermination comme quoi la température ambiante a changé.

2.  Appareil selon la revendication 1, dans lequel ledit moyen de réglage est arrangé pour augmenter la valeur de la température de référence en réponse à la détermination comme quoi la température ambiante a augmenté.

3.  Appareil selon la revendication 1 ou la revendication 2, dans lequel ledit moyen de réglage est arrangé pour diminuer la valeur de la température de référence en réponse à la détermination comme quoi la température ambiante a diminué.

4.  Appareil selon la revendication 2 ou la revendication 3, dans lequel ledit moyen de réglage est arrangé pour augmenter la valeur de la température de référence selon un premier taux, et pour diminuer la valeur de la température de référence selon un second taux, le premier taux étant supérieur au second taux.

5.  Appareil selon l'une quelconque des revendications précédentes, dans lequel ledit moyen de réglage est arrangé pour établir la valeur de la température de référence de manière sensiblement égale par rapport à la température ambiante mesurée en réponse à la détermination comme quoi la température ambiante est supérieure à la valeur de la température de référence.

6.  Appareil selon la revendication 5, dans lequel ledit moyen de réglage est arrangé pour établir la valeur de la température de référence de manière sensiblement égale par rapport à la température ambiante mesurée sensiblement immédiatement après la détermination comme quoi la température ambiante est supérieure à la valeur de la température de référence.

7.  Appareil selon la revendication 5 ou la revendication 6, dans lequel ledit moyen de réglage est arrangé pour établir la valeur de la température de référence de manière sensiblement égale par rapport à la température ambiante mesurée dans les limites d'une période de temps ne dépassant pas approximativement 20 minutes après la détermination comme quoi la température ambiante est supérieure à la valeur de la température de référence.

8.  Appareil selon l'une quelconque des revendications précédentes, dans lequel ledit moyen de réglage est arrangé pour, en réponse à la détermination comme quoi la température ambiante en cours est inférieure à la valeur de la température de référence, établir la température de référence selon une moyenne de la température ambiante en cours et au moins une température ambiante précédente et/ou la température de référence en cours.

9.  Appareil selon la revendication 8, dans lequel ledit moyen de réglage est arrangé pour calculer la valeur de la température de référence comme moyenne mobile de la température ambiante en cours et d'une pluralité de températures ambiantes précédentes.

10. Appareil selon la revendication 8 ou la revendication 9, dans lequel ledit moyen de réglage est arrangé pour calculer ladite valeur de la température de référence en faisant la moyenne des valeurs de températures ambiantes sur n périodes de temps t, où la température ambiante et une nouvelle valeur pour la température de référence sont calculées toutes les périodes de temps t.

11. Appareil selon la revendication 8, dans lequel ledit moyen de réglage est arrangé pour calculer la valeur de la température de référence sous la forme d'une moyenne pondérée de la température de référence en cours et la température ambiante en cours.

12. Appareil selon la revendication 11, dans lequel ladite moyenne pondérée est sur n périodes de temps t, où la température ambiante en cours et/ou la température de référence en cours et une nouvelle valeur pour la température de référence sont calculées toutes les périodes de temps t.

13. Système de surveillance de la pression des pneus (10) arrangé pour mesurer la pression et la température d'un fluide à l'intérieur d'au moins un pneu, le système comprenant l'appareil (18) permettant d'effectuer une compensation de température, l'appareil comportant un moyen de réglage de la pression mesurée du fluide en fonction de la valeur d'une température de référence et en fonction de la température mesurée du fluide, dans lequel l'appareil est en mesure de coopérer avec un moyen permettant de déterminer la température ambiante (26), **caractérisé en ce que** l'appareil est arrangé pour régler la valeur de la température de référence en réponse à la détermination comme quoi la température ambiante a changé.

14. Procédé permettant d'effectuer une compensation de température dans un système de surveillance de la pression des pneus arrangé pour mesurer la pression et la température d'un fluide à l'intérieur d'au moins un pneu et pour régler la pression mesurée du pneu par rapport à la valeur d'une température de référence, le procédé comportant l'étape consistant à déterminer la température ambiante, et est **caractérisé par**, en réponse à la détermination comme quoi la température ambiante a changé, le réglage de la température de référence.

15. Produit programme informatique comportant un code utilisable sur ordinateur stocké sur un support utilisable sur ordinateur, le code de programme informatique étant arrangé pour amener un ordinateur à effectuer le procédé selon la revendication 14.

Left Front (LF)

Sensor
RF Interface

12

Right Front (RF)

Sensor
RF Interface

12

Right Rear (RR)

Sensor
RF Interface

12

Left Rear (LR)

Sensor
RF Interface

12

RTP

RTT

16

RTP

RTT

RTP

RTT

16

RTP

RTT

ECU
RF Interface

RTP

RTT

RTP

RTT

RTP

RTT

RTP

RTT

Control
Module

18

14

10

28

Ambient
Temperature
Sensor    26

22

TCP (LF)
TCP (RF)
TCP (RR)
TCP (LR)

TCW (LF)
TCW (RF)
TCW (RR)
TCW (LR)

24

Instrument
Panel

20

Fig. 1

EP 2 142 389 B1

Fig. 2

Fig. 3

Fig. 4

Fig. 5

601 Initialise $T_{ref}$

602 Calculate New 24-Hour Average Temperature

603 Get Next Air Temperature, T(ots)

604 T(ots) > T(ref) ?

Y — 608 Set $T_{ref}$ to T(ots)

N — 605 Update Average Temperature for Current Hour

606 End of Hour ?

N

Y — 607 Calculate Average Temperature for Hour

Fig. 6

701

$[24\text{hr Array}]_{\text{hour} = 1 \dots 24} \rightarrow T_{\text{initial}}$

hour → 0 modulo 23

*Initialisation*

*5min sample and repeat of T(ots)*

702

Get Next T(ots)

704

703

N

N

End of hour?

T(ots) > T(ref)?

Y

Y

705

706

Calculate New T(ref) and continue to next hour

$[24\text{hr Array}]_{\text{hour} = 1 \dots 24} \rightarrow T(\text{ots})$

hour → 0

*Set all of [24hr Array] to T(ots)*

<u>Fig. 7</u>

Fig. 8

802 — Get T(hrly) for hour
$[24hr\ Array]_{hour} \rightarrow T(hrly)$

5min sample and repeat of T(ots)
Update array element for hour just elapsed with average outside air temperature for that hour

803 — Calc T(24hr)

$$T(24hr) = \frac{1}{24} \sum_{hour=0}^{23} [24hr\ Array]_{hour}$$

Calculate new 24hr average updated with new T(hrly)

804 — $T(ref) \rightarrow T(24hr)$
Hour $\rightarrow$ (Hour + 1) modulo 23

Update Tref
Move to next hour

Fig. 9

```
┌─────────────────────────────────┐
│        Get T(hrly) for hour     │     5min sample and repeat of T(ots)
└─────────────────────────────────┘
                 │
                 ▼
┌─────────────────────────────────┐
│          Calc T(24hr)           │     Calculate new 24hr average updated
│                                 │     with new T(hrly)
│  T(24hr) = 1/24 [23T(ref) + T(hrly)]  │
└─────────────────────────────────┘
                 │
                 ▼
┌─────────────────────────────────┐
│        T(ref) → T(24hr)         │     Update Tref
│        Hour → (Hour + 1)        │     Move to next hour
└─────────────────────────────────┘
```

$$T(24hr) = \frac{1}{24}\left[23T(ref) + T(hrly)\right]$$

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1384604 A